# EUROPEAN PATENT APPLICATION

(11) **EP 4 588 834 A1**
(43) Date of publication of application: **23.07.2025**
(21) Application number: 24153037.7
(22) Date of filing: 22.01.2024
(51) Int. Cl.: B65G 1/04, B65D 85/62, B65G 1/137, B65G 1/14

(54) **A METHOD AND SYSTEM FOR EMPLOYING STACKER FRAMES**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

The invention relates to a method, system and a computer program product for temporary storage of storage containers (106) in nearby stacker frames (6) during container retrieval operations.

The automated storage system comprises plurality of stacker frames that are stored in a storage column (105), stacked one above another. The method employs non-target stacker frames nearby for temporary storage of the containers from a target stacker frame to retrieve a target container. The stacker frames are assigned a ranking and are chosen based on their availability and their distance from the target stacker frame for storage.

## Description

### TECHNICAL FIELD

The present invention relates to an automated storage and retrieval system, in particular to the concept of stacker frames the storage system and a method for employing nearby stacker frames as temporary storage during retrieval of containers.

### BACKGROUND

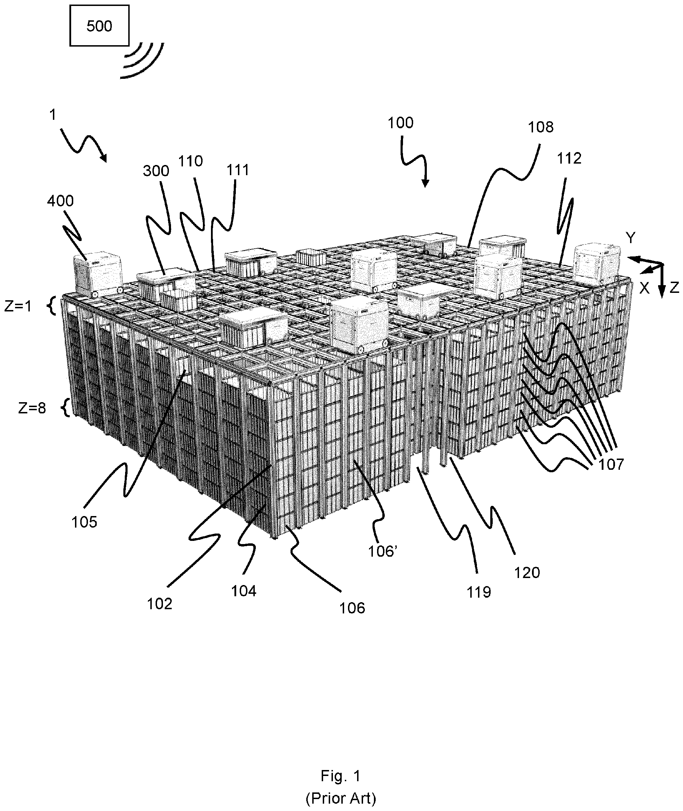

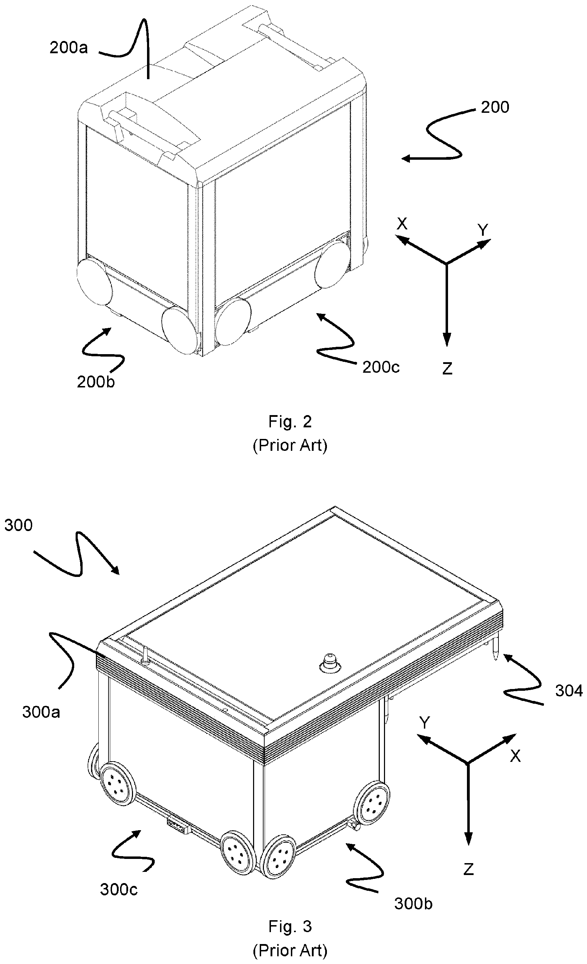

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The upright members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 200,300,400 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 200,300,400 in a first direction *X* across the top of the frame structure 100, and a second set of parallel rails 111 arranged perpendicular to the first set of rails 110 to guide movement of the container handling vehicles 200,300,400 in a second direction *Y* which is perpendicular to the first direction *X.* Containers 106 stored in the columns 105 are accessed by the container handling vehicles 200,300,400 through access openings 112 in the rail system 108. The container handling vehicles 200,300,400 can move laterally above the storage columns 105, i.e. in a plane which is parallel to the horizontal *X-Y* plane*.*

The upright members 102 of the framework structure 100 may be used to guide the storage containers during raising of the containers out from and lowering of the containers into the columns 105. The stacks 107 of containers 106 are typically self-supporting.

Each prior art container handling vehicle 200,300,400 comprises a vehicle body 200a,300a,400a and first and second sets of wheels 200b, 200c, 300b, 300c,400b,400c which enable the lateral movement of the container handling vehicles 200,300,400 in the *X* direction and in the *Y* direction, respectively. In Figs. 2, 3 and 4 two wheels in each set are fully visible. The first set of wheels 200b,300b,400b is arranged to engage with two adjacent rails of the first set 110 of rails, and the second set of wheels 200c,300c,400c is arranged to engage with two adjacent rails of the second set 111 of rails. At least one of the sets of wheels 200b, 200c, 300b,300c,400b,400c can be lifted and lowered, so that the first set of wheels 200b,300b,400b and/or the second set of wheels 200c,300c,400c can be engaged with the respective set of rails 110, 111 at any one time.

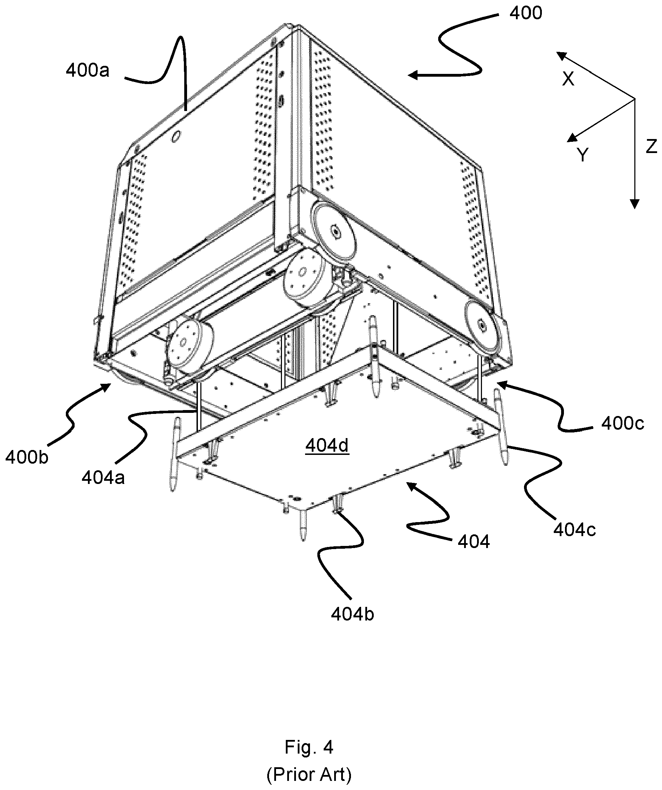

Each prior art container handling vehicle 200,300,400 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 200,300,400 so that the position of the gripping / engaging devices with respect to the vehicle 200,300,400 can be adjusted in a third direction *Z* which is orthogonal the first direction *X* and the second direction *Y.* Parts of the gripping device of the container handling vehicles 300,400 are shown in Figs. 3 and 4 indicated with reference number 304,404. The gripping device of the container handling device 200 is located within the vehicle body 200a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1, *Z*=6. The container handling vehicles 200,300,400 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y*-direction, while each storage cell may be identified by a container number in the *X-, Y-* and *Z*-direction.

Each prior art container handling vehicle 200,300,400 comprises a storage compartment or space for receiving and stowing a storage container 106 when transporting the storage container 106 across the rail system 108. The storage space may comprise a cavity arranged internally within the vehicle body 200a,400a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 200 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 400 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 200,300,400 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 200,300,400 can drop off storage containers 106 to be transported to an access or a transfer station, and the second port column 120 may be a dedicated pick-up port column where the container handling vehicles 200,300,400 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 200,300,400 is instructed to retrieve the target storage container 106 from its position and transport it to the drop-off port column 119. This operation involves moving the container handling vehicle 200,300,400 to a location above the storage column 105 in which the target storage container 106 is positioned, retrieving the storage container 106 from the storage column 105 using the container handling vehicle's 200,300,40 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 200,300,400 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 200,300,400 is instructed to pick up the storage container 106 from the pick-up port column 120 and transport it to a location above the storage column 105 where it is to be stored. After any storage containers 106 positioned at or above the target position within the stack 107 have been removed, the container handling vehicle 200,300,400 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 200,300,400 so that a desired storage container 106 can be delivered to the desired location at the desired time without the container handling vehicles 200,300,400 colliding with each other, the automated storage and retrieval system 1 comprises a control system 500 which typically is computerized and which typically comprises a database for keeping track of the storage containers 106.

The prior art automated storage systems are restricted regarding the height of the stacks of storage containers by the practical lifting height of the container handling vehicles and/or the weight that may be supported by the lower storage container in a stack of storage containers. Thus, a storage system in which the storage containers may be rearranged more efficiently would be advantageous.

The storage systems store storage containers in vertical stacks. When a target storage container is positioned underneath a large number of other storage containers in a stack at a first location, the digging operations to retrieve the target container can become cumbersome, as the container handling vehicles need to remove all the storage containers stored above the target storage container and place them at another location (a second location).

The second location may be located in a separate area close to the framework for example a rack or a shelf. This operation involves substantial movement of the container handling vehicles to and from the storage area and thus would increase the overall energy consumption of the system. This has a large impact on energy consumption particularly in a large storage system with hundreds of container handling vehicles in operation.

The process of moving storage containers from the first location to the second location also increases traffic in the vicinity of the first location (the target container location) due to the movements of the container handling vehicles, leading to greater waiting times and burdening the control system with added traffic management tasks.

DE102020207852A1 describes a storage system and method for operation of transport vehicles in a storage system. The transport vehicle is provided with gripper devices that extend laterally outside of the container receiving space and grip one or more storage containers and move them into the container receiving space.

DE102018213678A1 describes a device for sorting goods in a storage facility. The system comprises each grid cell provided with a drop mechanism. The transport vehicles are provided with drop mechanism at the base, through which the goods are released into a grid cell. The grid cells further drop the goods to a level below the storage facility.

DE102018213680A1 describes a device for sorting goods in a storage facility. A transport vehicle operating on the grid is provided with a drop mechanism at the base to drop the goods into the grid cells. The grid cells further drop the goods to a collecting device arranged below the grid.

EP2847105A1 describes storage systems employing a first and second type of container handling vehicles on the grid. The first vehicle can carry several containers in a single operation and the second vehicle can carry a single container. The two vehicles operate together to remove containers.

The challenges with the above mentioned prior art systems is that the process is time consuming and cumbersome and they reduce the throughput of the system. They also add to the traffic congestion in the operating area of the storage system.

At least preferred embodiments of the invention provide a storage system that can be rearranged efficiently.

At least preferred embodiments of the invention increase efficiency of the storage system and reduce unnecessary wear and tear on the system components by reducing movements of the container handling vehicles during digging operations.

### SUMMARY

In a first aspect, there is provided a method for employing stacker frames for storage of storage containers in an automated storage and retrieval system (hereinafter referred to as a 'storage system').

A stacker frame may be defined as a housing or a large container that is capable of receiving a small stack of storage containers, for example: up to 6 storage containers within the housing.

The storage system comprises a framework structure comprising a plurality of upright members defining a plurality of storage columns for storing a stack of stacker frames, the stacker frames being configured to hold a stack of storage containers in an interior space of the respective stacker frame.

A stacker frame lifter is configured to handle stacker frames and/or, the storage containers stored in the respective stacker frame.

A plurality of container handling vehicles is operating on a rail system and are configured to handle the storage containers.

The term 'handle' may be construed to mean moving or picking and placing the one or more stacker frames and/or the storage containers by the stacker frame lifter and the container handling vehicles configured for the purpose.

The system comprises a control system configured to send instruction signals to control operations of the stacker frame lifter and the plurality of container handling vehicles. The method comprises the steps of
- A. sending instruction signals by the control system to the stacker frame lifter and the container handling vehicles to retrieve a target storage container from a target stacker frame;
- B. moving one or more non-target storage containers positioned above the target storage container, by the stacker frame lifter or the container handling vehicle, from the target stacker frame to a non-target stacker frame for temporary storage, so that the target storage container is the uppermost storage container in the target stacker frame; and
- C. retrieving the target storage container using the stacker frame lifter or the container handling vehicle.

The target storage container is a storage container of interest, that is to be retrieved out of the stacker frame. The non-target storage containers are storage containers which are placed above the target storage container in the stacker frame.

The target storage container is positioned within the target stacker frame. The remaining stacker frames which do not hold or store the target storage containers are referred to as non-target stacker frames.

The uppermost storage container may be the position of the target storage container in the target stacker frame at the top level, such that the target storage container is directly accessible by the container handling vehicle or the stacker frame lifter.

The non-target stacker frame may have spare capacity for temporary storage of the non-target storage containers. Alternatively, or in addition, the non-target stacker frame may be employed for temporary storage by overfilling the non-target stacker frame such that the non-target storage container is protruding from the grid cell comprising the non-target stacker frame.

In an exemplary process of the first aspect, the framework structure comprises a rail system arranged on top of the framework structure for guiding movement of the container handling vehicles operating on top of the rail system, wherein the rail system comprises a first set of parallel rails arranged in a first direction (X), and a second set of parallel rails arranged in a second direction (Y) which is perpendicular to the first direction and wherein the first and second sets of rails intersect to form grid cells with grid openings.

In another example process, the method comprising performing the following before step B:
- removing a non-target stacker frame stored above the target stacker frame from the storage column using the stacker frame lifter; and
- repeating the above step of removing the non-target stacker frame, until the target stacker frame is at an upper position in the stack of the stacker frames.

The upper position is defined as the first position in the vertical stack of stacker frames, such that the target stacker frame can be directly accessed by the stacker frame lifter.

In another example process, wherein step B comprises:
- determining a capacity, position and availability of the non-target stacker frames of a stacker frame system (7);
- assigning ranking to the non-target stacker frames based on their availability, capacity, and distance to the target stacker frame; and
- choosing the non-target stacker frames for temporary storage based on their assigned ranking.

In an example, the availability of the non-target stacker frame may be determining if the non-target stacker frame can store non-target storage container to overfill and protrude above the grid cell.

In an example, the capacity may be defined as the number of storage containers each non-target stacker frame may hold. For example, the same non-target stacker frame can store one, two, three or more non-target storage containers.

Each non-target stacker frame may be over filled such that only one non-target storage container protrudes above the grid cell.

If a non-target stacker frame already stores a storage container protruding above the grid cell, the non-target stacker frame may be considered not available.

The ranking to the non-target stacker frames may be assigned such that the closest non-target stacker frame in distance and that is available is assigned a highest rank.

The highest ranking criterion determines the choosing/picking of the non-target stacker frame for temporary storage of non-target storage containers.

In another example process, step B comprises:
- moving the one or more non-target storage containers to a single non target stacker frame based on the ranking.

In another example process, step B comprises:
- moving the one or more non-target storage containers to a plurality of non-target stacker frames.

In an example, if there are three non-target storage containers that are moved from the target stacker frame and there may be two available non-target stacker frames chosen based on their ranking for temporary storage. The first non-target stacker frame (A) may have the capacity to hold a single non-target storage container and a second non-target stacker frame (B) may have the capacity to hold two non-target storage containers to overfill. In such a scenario, one non-target storage container is stored temporarily in stacker frame (A) and two non-target storage containers are stored temporarily in stacker frame (B).

In another example process, the step B comprises:
- positioning the non-target storage container(s) to overfill the non-target stacker frame, such that the non-target storage container protrudes above the framework structure from the non-target stacker frame location. More particularly, the non-target container protrudes from the grid cell comprising the non-target stacker frame to overfill.

Overfill may be defined as the storage container positioned to protrude above the above mentioned grid cell.

In another example process, wherein each stacker frames comprises:
- one or more guiding elements provided on inner side wall(s) of the stacker frame and configured to guide the storage containers during storage; and wherein the method comprises:
- positioning the non-target storage containers over the upper opening (or into the upper opening) of the non-target stacker frames; and
- sliding the non-target storage containers along the one or more guiding elements for storage of the non-target storage container within the non-target stacker frames.

In an example, the guiding elements may comprise depressions or recesses that allow corresponding recesses on the storage containers to be fitted onto and slide through so as to hold the storage containers stably in place within or on top of the stacker frames.

Alternatively, or in addition, the lifting frame of the container handling vehicle may be provided with guiding elements along corners. In such a scenario, the non-target storage containers may be guided by the guiding elements of the lifting frame, during positioning of the non-target container into the non-target stacker frame.

In a second aspect, there is provided an automated storage and retrieval system employing stacker frames for storage of storage containers, wherein the system comprises:
- a framework structure comprising:
- a plurality of upright members defining a plurality of storage columns for storing a stack of stacker frames, the stacker frames being configured to hold a stack of storage containers in an interior space of the respective stacker frame,
- a stacker frame lifter configured to handle stacker frames and/or the storage containers stored in the respective stacker frame;
- a plurality of container handling vehicles for operation on a rail system and configured to handle the storage containers;
- a control system configured to send instruction signals to control operations of the stacker frame lifter and the plurality of container handling vehicles to perform the method steps in accordance with the first aspect.

The term 'handling' is defined in relation to the first aspect for the container handling vehicle and the stacker frame lifter.

In an example configuration of the second aspect, the system comprises the rail system arranged on top of the framework structure for guiding movement of container handling vehicles operating on top of the rail system, wherein the rail system comprises a first set of parallel rails arranged in a first direction (X), and a second set of parallel rails arranged in a second direction (Y) which is perpendicular to the first direction and wherein the first and second sets of rails intersect to form grid cells with grid openings.

In an example configuration of the second aspect, the stacker frame lifter comprises a gantry arrangement that extends above the framework structure.

In another example configuration of the second aspect, the gantry arrangement comprises two lifting frames: an inner lifting frame and an outer lifting frame. The inner lifting frame is configured to lift the storage containers within the stacker frame and the outer lifting frame is configured to lift the stacker frames.

Alternatively, or in addition, the two lifting frames may be separate arrangements, that operate on the gantry arrangement independently of each other to lift and place storage containers to and from the stacker frames.

In another example configuration of the second aspect, each stacker frame comprises a guiding element provided on inner side wall(s) of the stacker frame. More particularly, on the corners of the inner side wall(s) and configured to guide the non-target storage containers during storage by positioning and sliding the non-target storage containers from an upper opening of the stacker frame along the guiding elements for storage of the non-target storage containers within the stacker frames.

In another example configuration of the second aspect, each stacker frames comprises a recess provided on an upper section of a side wall of the stacker frame which is configured to engage with a releasable latch on the stacker frame lifter. More, particularly, the releasable latch provided on the inner and the outer lifting frame of the stacker frame lifter.

The recesses may be provided on the center or middle of the upper section or towards the sides.

In another example configuration of the second aspect, the control system is configured to send instruction signals to the container handling vehicles to temporarily block their motion over or around the non-target stacker frame employed for temporary storage. In other words, the control system sends instruction signals to the container handling vehicles to block the movement on top of the stacker frames used for temporary storage.

In third aspect, the invention concerns a computer program product comprising instructions which, when the program is executed by a computer coupled with or being a part of the control system of an automated storage and retrieval system of the second aspect, causes the computer to send instruction signals to a stacker frame lifter and a container handling vehicle to carry out the process of the first aspect.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective side view of a framework structure of a prior art automated storage and retrieval system.
Fig. 2 is a perspective side view of a prior art container handling vehicle having an internally arranged cavity for carrying storage containers therein.
Fig. 3 is a perspective side view, of a prior art container handling vehicle having a cantilever for carrying storage containers underneath.
Fig. 4 is a perspective side view, of a prior art container handling vehicle having a central cavity construction for carrying storage container.
Fig. 5 is a perspective side view, of a prior art storage container employed in the storage system.
Fig. 6a and 6b is a perspective side view, of a stacker frame holding a stack of storage container within.
Fig. 7a and 7b is a perspective view of a stacker frame employed for temporary storage to overfill the stacker frame.
Fig. 8a and 8b is a perspective side view, of stacker frames in a storage column and a container handling vehicle operating on top of the framework structure.
Fig. 9a-c illustrates a sequence of steps for retrieving a target storage container from a target stacker frame in the framework structure.
Fig. 10a-b illustrates a gantry arrangement for a stacker frame lifter for retrieving a target storage container from a target stacker frame.
Fig. 11a-11d illustrates a second type of framework structure with a gantry arrangement including an inner and outer lifting frames.
Fig. 12a-c illustrates another example of a framework structure and the gantry arrangement with inner and outer lifting frames.
Fig. 13 is a flowchart illustrating method steps of retrieving a target storage container and employing stacker frames for temporary storage.
Fig. 14 is a flowchart of the process for assigning ranking to the stacker frames.

### DETAILED DESCRIPTION

In the following, embodiments of the invention will be discussed in more detail with reference to the appended drawings. It should be understood, however, that the drawings are not intended to limit the invention to the subject-matter depicted in the drawings.

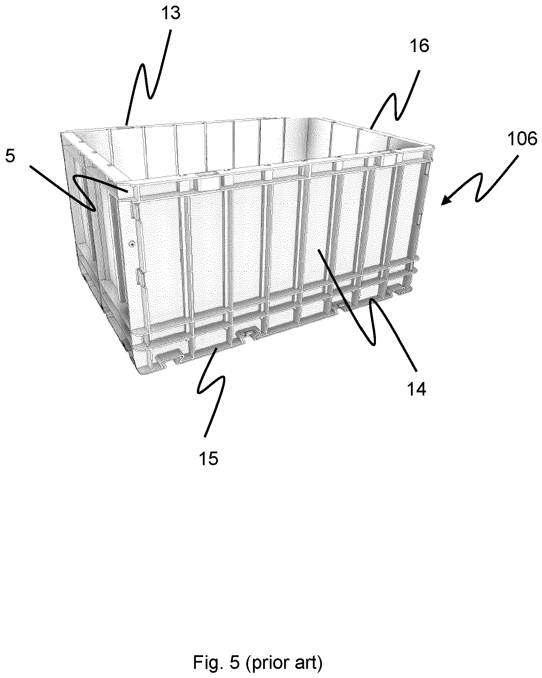

Fig. 5 is a perspective side view, of a prior art storage container employed in the storage system. The prior art storage container 106 comprises four side walls 14, a bottom 15, an open top comprising a top rim 16 that extends throughout the open top of the container 106. The storage container 106 is also provided with container connecting recesses 13 at the sides of the upper rim 16. The container connecting recesses 13 lock into corresponding gripper device 304 provided on the lifting device of the container handling vehicles 200, 300, 400 to allow lifting of the storage container 106 by the container handling vehicle 200, 300, 400. The storage container 106 may optionally include a lid 5 for closing the storage container and sealing off the contents within the storage container 106.

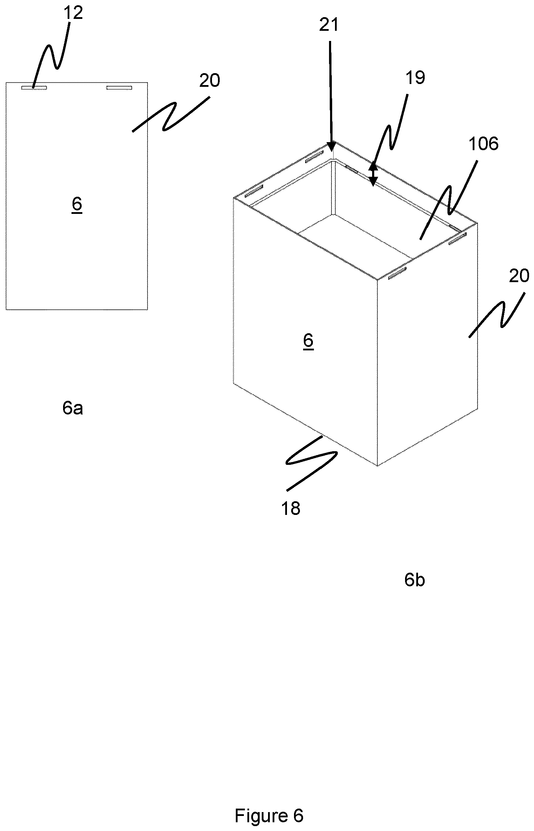

The automated storage and retrieval system hereinafter referred to as the 'storage system' will be described in more detail with examples with reference to Figs 6 to 14.

The framework structure 100 of the automated storage and retrieval system 1 is constructed in a similar manner to the prior art framework structure 100 described above in connection with Figs. 1-3. That is, the framework structure 100 comprises a number of upright members 102, and comprises a first, upper rail system 108 extending in the X direction and Y direction.

The framework structure 100 comprises storage compartments in the form of storage columns 105 provided between the upright members 102 wherein stacker frames 6 are stackable in stacks 107 within the storage columns 105. Each stacker frame 6 comprises storage containers 106 stacked within.

The framework structure 100 can be of any size. In particular, it is understood that the framework structure can be considerably wider and/or longer and/or deeper than disclosed in Fig. 1. For example, the framework structure 100 may have a horizontal extent of more than 700×700 columns and a storage depth of more than twelve containers.

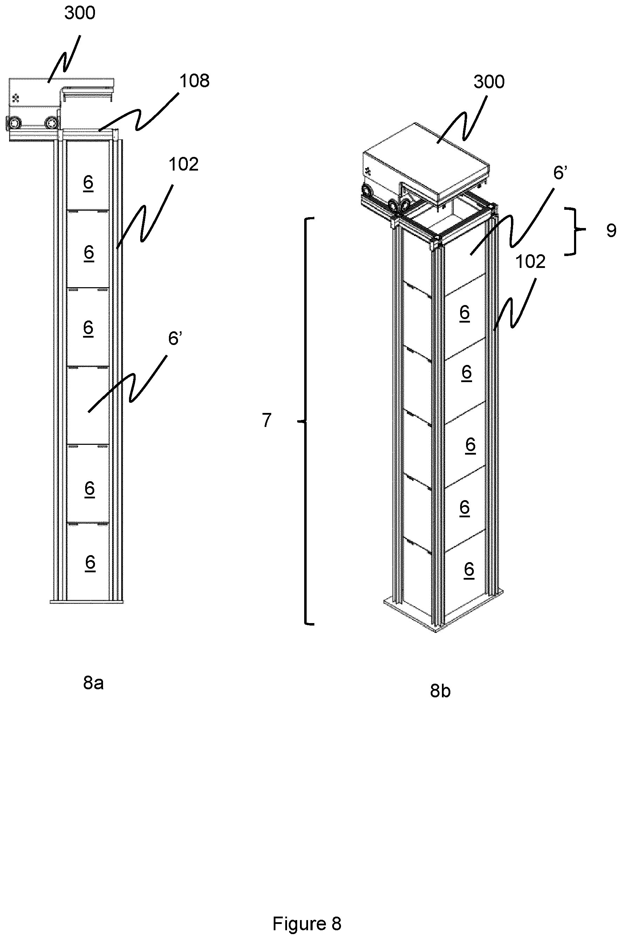

A first exemplary storage system 1' is shown in figs. 8-12. The storage system 1' comprises a framework structure 100, a stacker frame system 7, storage containers 106, a stacker frame lifter 8 and a container lifter 300. The stacker frames 6 of the stacker frame system 7 may optionally include lids 5'. The framework structure 100, the storage containers 106 and the container lifter 300 may be similar to the corresponding features of the prior art system in fig. 1. In some illustrations, stacker frames 6 are shown without lid 5', but this is not to be understood as limiting the scope of protection and is merely chosen for simplification or for showing that stacks of stacker frames 6 may be provided with or without lids.

The storage system 1' herein comprises stacker frames 6 for storing containers 106 in the storage columns 105 comprising a storage volume 104 of the system. A stacker frame 6 may be defined as a housing or a large container that is capable of receiving a small stack of storage containers (for example: up to 6 storage containers) within the housing. The stacker frame 6 with the stack of storage container 106 stored within is also referred to as 'a nested stack'.

The stacker frames 6 increase the storage density of the storage systems by allowing storage of storage containers 106 within them. They also enable fewer digging operations, because individual stacker frames of interest, also called as target stacker frame 6' can be lifted by the stacker frame lifter 8. This is particularly important when the storage system comprises vertical stacks than are several meters tall. In such a scenario, and where stacker frames are not used, digging operations could be reduced, by temporary removal of all the non-target storage containers that are above the target storage container and storing them at nearby stacker frames temporarily. The term 'nearby' may be referred to a range in distance to the target stacker frame 6' that includes anywhere between an adjacent grid cell and up to ten grid cell spaces on all the sides of the target stacker frame 6'. The details of temporary storage will be further explained with reference to figures 8-12.

Fig. 6a and 6b shows a front view and side view of a stacker frame employed in the storage system 1. The stacker frame 6 can be envisaged as a large outer container 6 that can hold several storage containers 106 within. Each stacker frame 6 may hold a maximum of up to 6 storage containers 106 within. The number of storage containers is only an example and does not limit the scope of the stacker frames to hold more storage containers for example: 8 storage containers. The storage container 106 may be a standard size storage container employed in the framework structure that may comprise outer dimensions, i.e., width, length, and height, that correspond to the dimensions of common storage containers used in grid-based automated storage and retrieval systems. The interior dimensions may be e.g., 600 × 400 mm (length × width) and may have various heights, for example 200 mm, 310 mm, or 400 mm.

The top rim 16 of the storage containers 106 may comprise several apertures or openings for receiving or passing through gripping devices of a lifting frame of a container handling vehicle 200,300,400 or a stacker frame lifter 8. The top opening of the storage containers 106 allows items to be placed into the interior space or to be removed therefrom.

However, smaller storage containers may also be used, for example with half the size, a third of the size, or a quarter of the size, and so on, of a common storage container. These smaller storage containers could be arranged adjacent to each other in one or more layers, wherein one layer may correspond to the footprint of a common storage container.

The stacker frame 6 as seen in fig 6. comprises side walls 20, a base 18 and an open top (or upper opening) 19 and is stackable by means of recesses provided at the base of the stacker frames. The stacker frame may optionally include a lid 5' to cover the top opening 19 when desired. The lid 5' may be provided with recesses that allow the base of another stacker frame 6 to be supported on top of it, thus allowing the stacker frames 6 to be stacked one on top of another.

The stacker frame 6 also includes recesses 12 provided on an upper section of the side walls 20 as shown in 6a. The recesses 12 are horizontal openings, which are rectangular shaped and configured to allow engagement of lifting frames of the stacker frame lifters 8 that help in lifting the stacker frame 6. However, the recesses 12 may be envisaged to be structural openings of any shape that can be configured to allow engagement with lifting frames and particularly their gripper devices.

The inner side walls 20 of the stacker frames are provided with guiding elements 21 that extend longitudinally at the corners of the stacker frames 6. The stacker frames 6 may include guiding elements 21 at each corner of the inner side walls. The guiding elements 21 provide support and guide the storage containers 106 through the upper opening 19 vertically into a storage volume within the stacker frame 6.

The guiding elements 21 may be structures such as protrusions, depressions, wedges etc. that allow storage container 106 to be guided easily within the stacker frame 6. The storage containers 106 may comprise corresponding recesses on their outer surfaces and more particularly, at the outer corners to allow them to slide across the guiding elements 21 of the stacker frames 6.

The stacker frame 6 in fig.6b is almost full to its storage capacity. Meaning that the stacker frame 6 may be holding a maximum of 6 storage containers 106 within it. However, the upper opening 19 of the stacker frames 6 as seen includes storage space that can accommodate at least one storage container 106 on the top. When the storage container 106 is positioned on top, the stacker frame 6 is overfilled.

The purpose of the application may be envisaged to almost overfill the stacker frames and employ them for temporary storage.

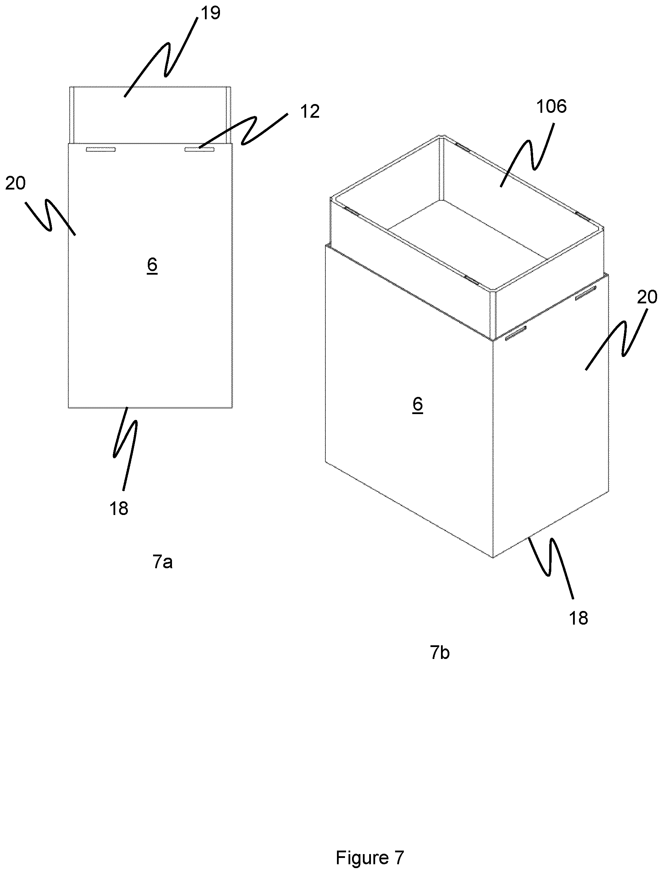

Fig. 7a and 7b show a stacker frame employed for temporary storage to overfill the stacker frame. The stacker frame 6 acts as a temporary storage for the storage container 106 stored at the upper opening 19. This results in overfilling of the stacker frame 6.

Fig. 8a and 8b depicts a stacker frame system 7 comprising a column of stacker frames 6 in a storage column 105. In this example, stacker frame system 7 comprises a maximum of six stacker frames 6 stacked one above another.

A container handling vehicle 300 is operating on top of a rail system 108 provided at the top of the framework structure 100.

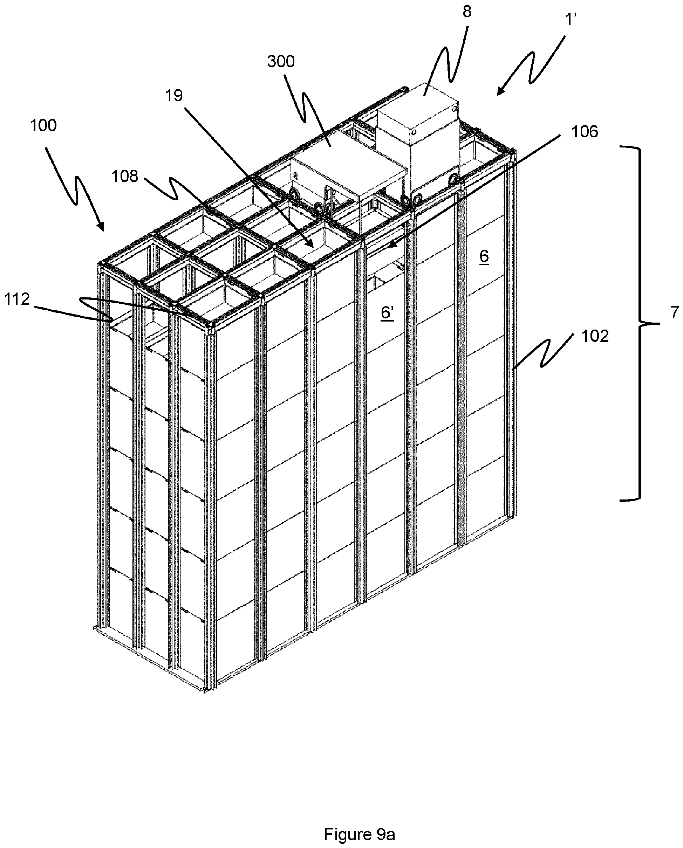

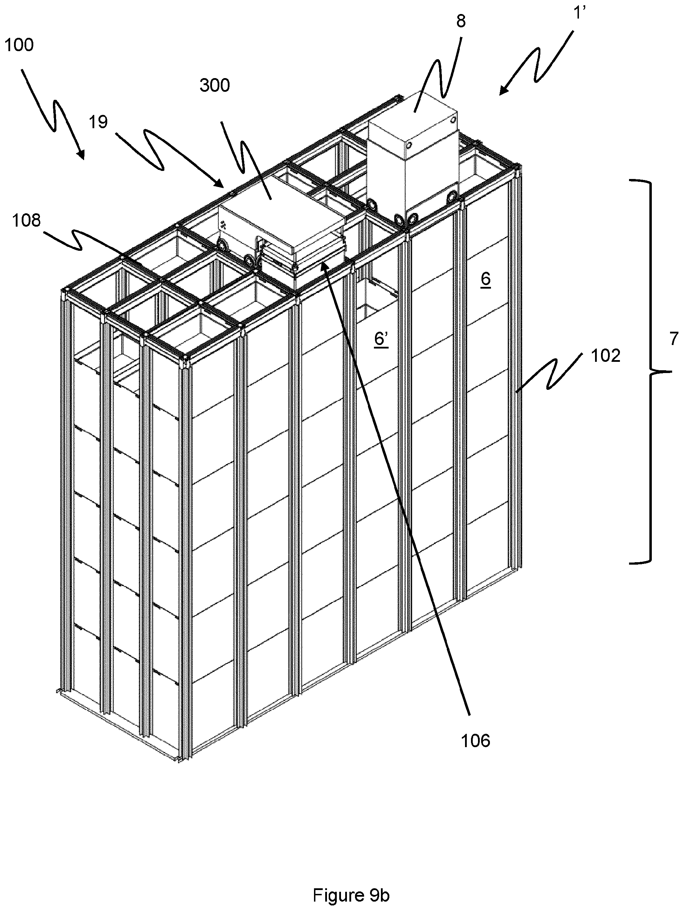

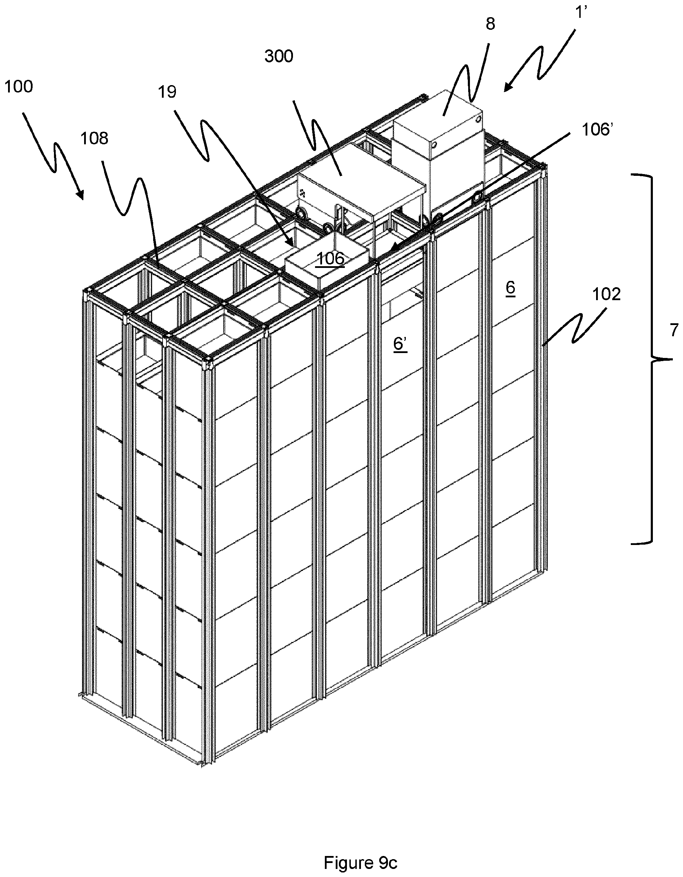

In figure 8a, a target stacker frame 6' is positioned at a third position from the bottom of the stack of the stacker frame system 7. In figure 8b, the target stacker frame 6' is moved to an upper position 9 of the stack. The movement is performed by a stacker frame lifter 8 and these details will be explained in relation to figure 9.

The container handling vehicle 300 is positioned on the grid cell on top of the target stacker frame 6'. The container handling vehicle 300 performs digging operations within the target stacker frame 6' i.e., the container handling vehicle 300 lifts and moves the non-target storage containers 106 stored above a target storage container 106' from the target stacker frame 6'. The process of digging is repeated by the container handling vehicle 300 until the target storage container 106' is accessible by the container handling vehicle 300. The non-target storage containers 106 removed during digging may be stored in nearby stacker frames temporarily.

The nearby stacker frames 6 are chosen based on their availability, capacity to store storage containers and their distance from the target stacker frame 6'. The factors such as availability, capacity and distance are used to compute ranking for the stacker frames nearby the target stacker frame 6'. The non-target storage containers 106 are then moved into non-target stacker frames 6 which possess the highest ranking.

Fig. 9a-c illustrates a sequence of steps for retrieving a target storage container from a target stacker frame in the framework structure. The sequence of steps in retrieving a target storage container 106' from a target stacker frame 6' will be explained herein. Shown in 9a is a framework structure 100 comprising a rail system 108 that extends on top of the framework structure and is provided with a first set of parallel rails extending in a first direction X and a second set of parallel rails extending in a second direction Y which is perpendicular to the first direction. The two sets of rails intersect to form grid cells with grid openings 112.

The framework structure 100 comprises a stacker frame system 7 with stacks of stacker frames 6. As seen in 9a, a target stacker frame 6' is located at a second position from the top of the stacker frame system 7 in a storage column 105. The top position of the stacker frame system 7 in the storage column is empty. Thus, a container handling vehicle can directly access the storage containers 106 inside the target stacker frame 6'.

The container handling vehicle 300 is positioned on top of the grid cell and extends its gripping device 304 downwards to grip and lift a non-target storage container 106 that is positioned above a target storage container 106' in the target stacker frame 6'. The container handling vehicle 300 lifts the non-target storage container 106.

A stacker frame lifter 8 is also positioned on top of the rail system on the framework structure 100 close to the target stacker frame 6'. The stacker frame lifter 8 is employed to lift and move the non-target stacker frames 6 that may be positioned above the target stacker frame 6.

In figure 9b, the container handling vehicle 300 has received instruction signals from a control system 500 to position the non-target storage container 106 in a non-target stacker frame 6 which is a neighboring stacker frame 6. The neighboring stacker frame 6 was chosen as it had the highest ranking among the available stacker frames 6 for storage. The non-target storage container 106 is being positioned on top of the non-target stacker frame 6 to overfill the stacker frame and employ the upper opening 19 of the stacker frames 6 as temporary storage.

In figure 9c, the overfilled stacker frame 6 is observed holding the non-target storage container 106. While, the container handling vehicle 300 moves to the target stacker frame 6' and continues to perform digging operations to retrieve the target storage container 106'.

The stacker frame lifter 8 may be employed for lifting stacker frames 6 when needed. For this purpose, the stacker frame lifter 8 may comprise a lifting arrangement with a gripper device similar to that of the container handling vehicle 200 as described in relation to figure 4.

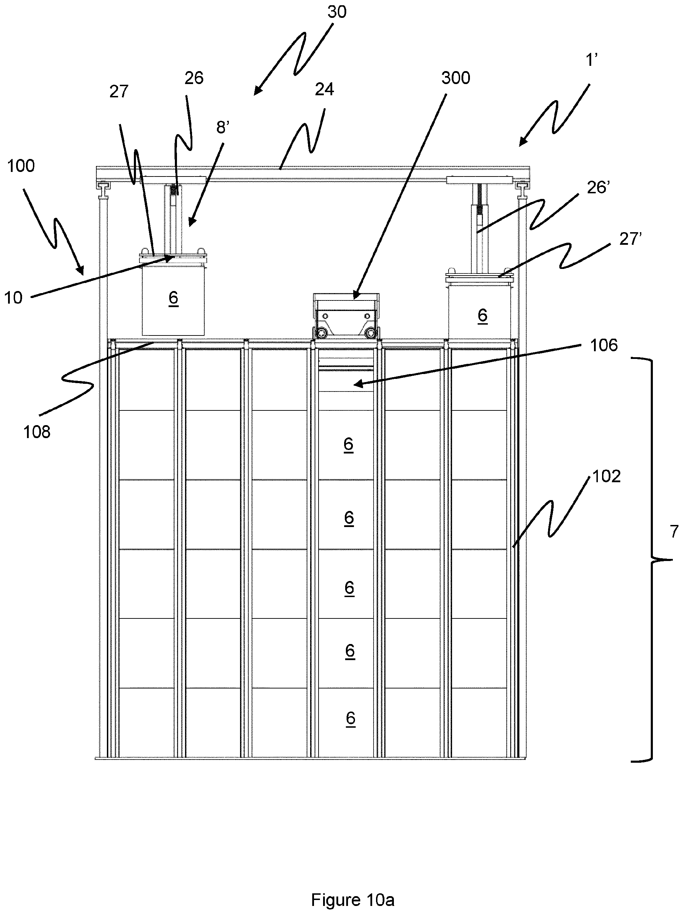

Fig. 10a-b illustrates a second embodiment of the storage system comprising a gantry arrangement for a stacker frame lifter for retrieving a target storage container from a target stacker frame. The framework structure 100 comprises rail system 108 on top of the framework structure. A gantry arrangement 30 extends from the upright members 102 at the ends of the framework structure 100. The gantry arrangement 30 comprises a first gantry beam 24 that extends horizontally on top of the framework structure 100, a second gantry beam 25 that extends horizontally from the ends of the first gantry beam 24, a first telescopic arm 26 and a second telescopic arm 26'. The first and second telescopic arms 26' may be extendable downwards and configured to reach a desired stacker frame 6 in the stacker frame system 7.

From the ends of the telescopic arms 26, 26' extend an outer lifting frame 27 and an inner lifting frame 27'.

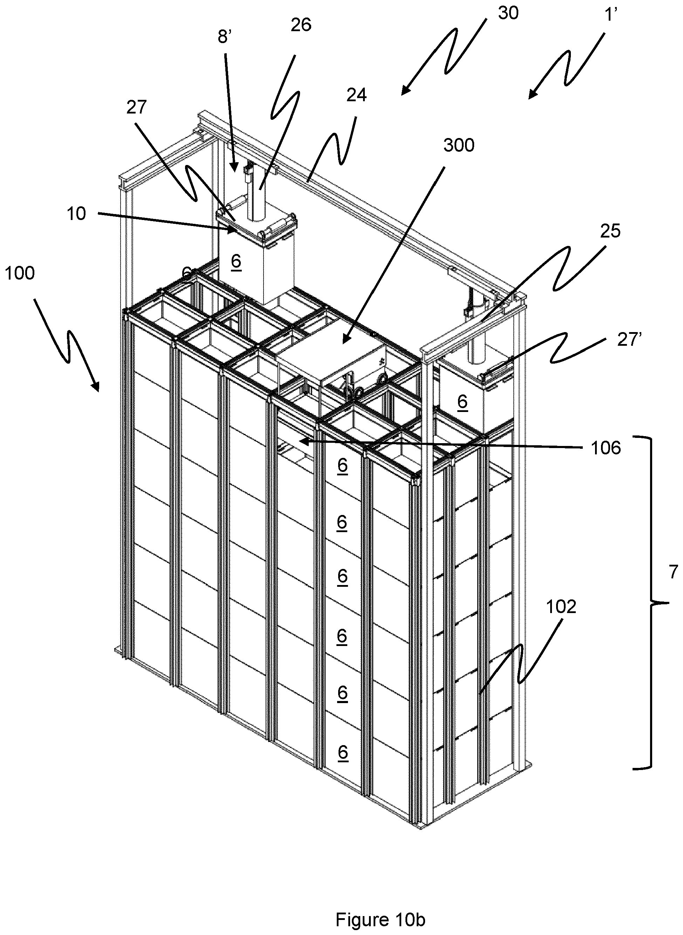

The outer lifting frame 27 grips onto a stacker frame by engaging the gripper device with the recesses 12 on the stacker frames 6 as in figure 10.

The inner lifting frame 27' normally grips onto a storage container 106 by engaging the gripper device with the recesses of the storage container 13. However, the inner lifting frame 27' in this example of figure 10, is configured and sized to engage its gripper device with the stacker frame 6.

The container handling vehicle 300 seen in figure 10b works in cooperation with the inner lifting frame 27 and outer lifting frame 27' of the gantry arrangement 30 to retrieve the target storage container 106'from the stacker frame system 7.

The inner lifting frame 27' and outer lifting frame 27 may receive instruction signals from the control system 500 to remove non-target stacker frames 6 stored above a target stacker frame 6'. The outer lifting frame 27 may lift one non-target stacker frame 6 and move it to an assigned location in the vicinity or an empty location on the framework. The inner lifting frame 27' may lift a second non-target stacker frame 6 and move it to another location on the framework 100. The container handling vehicle 300 may then access the target storage container 106' from the target stacker frame 6' (seen in figure 10b the target storage container 106' is directly accessible as it is stored at the top). If the target storage container 106' is stored deep inside the target stacker frame 6', the container handling vehicle 300 may perform digging operations to lift and store the non-target storage containers 106 at nearby stacker frames 6 as instructed by the control system 500.

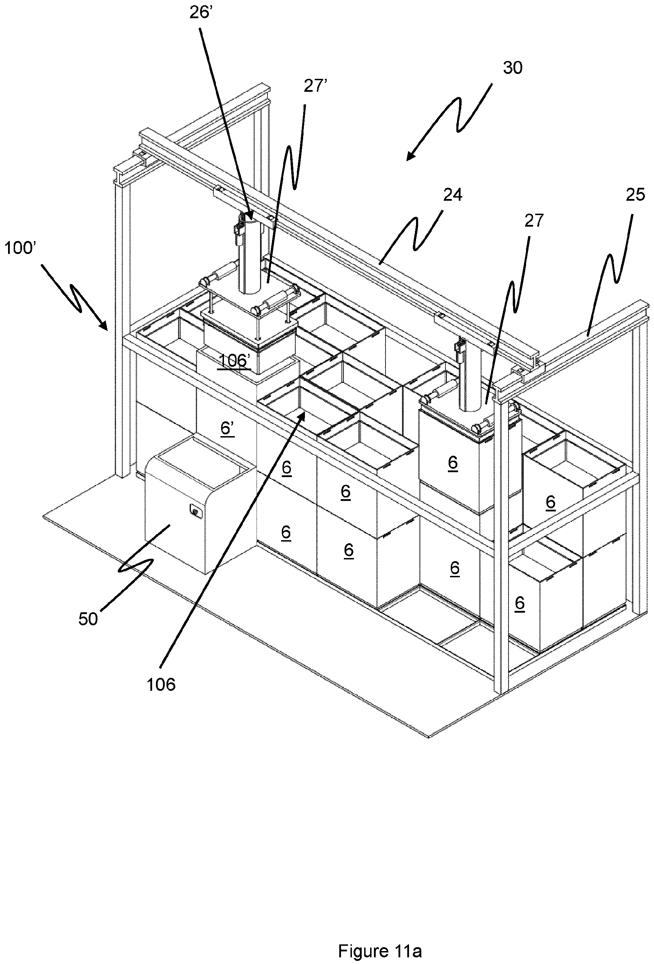

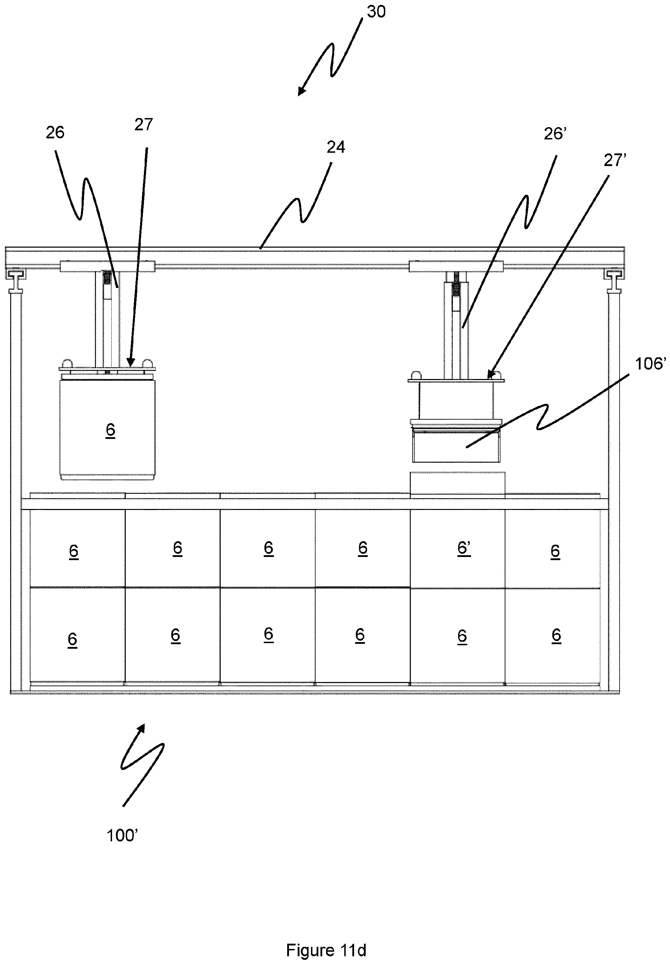

Fig. 11a-11d illustrates a second type of framework structure with a gantry arrangement including an inner and outer lifting frames. The framework structure as seen does not include a rail system 108 on top of the framework structure 100'. The storage columns 105 store stacker frames 6 in vertical stacks. The gantry arrangement 30 as seen includes an inner lifting frame 27' and an outer lifting frame 27. The inner lifting frame 27' is configured to lift storage containers 106, 106' stored within the stacker frames 6. The outer lifting frame 27 is configured to lift stacker frames 6 from the storage columns.

The inner and outer lifting frames 27', 27 can be moved horizontally along the gantry arrangement so as to be able to access different parts of the framework structure 100'. The lifting frames 27, 27' are connected to a first gantry beam 24 by means of telescopic arms 26, 26'. The telescopic arms 26', 26 allow extension and retraction of the inner and outer lifting frames 27', 27.

In figure 11a, the outer lifting frame 27 is seen lifting a non-target stacker frame 6 from its top position from the stack of stacker frames 6. While, the inner lifting frame 27' is seen lifting a target storage container 106' out of a target stacker frame 6'. The target storage container 106' may be transferred direct to an access station 50 arranged next to the framework structure 100'.

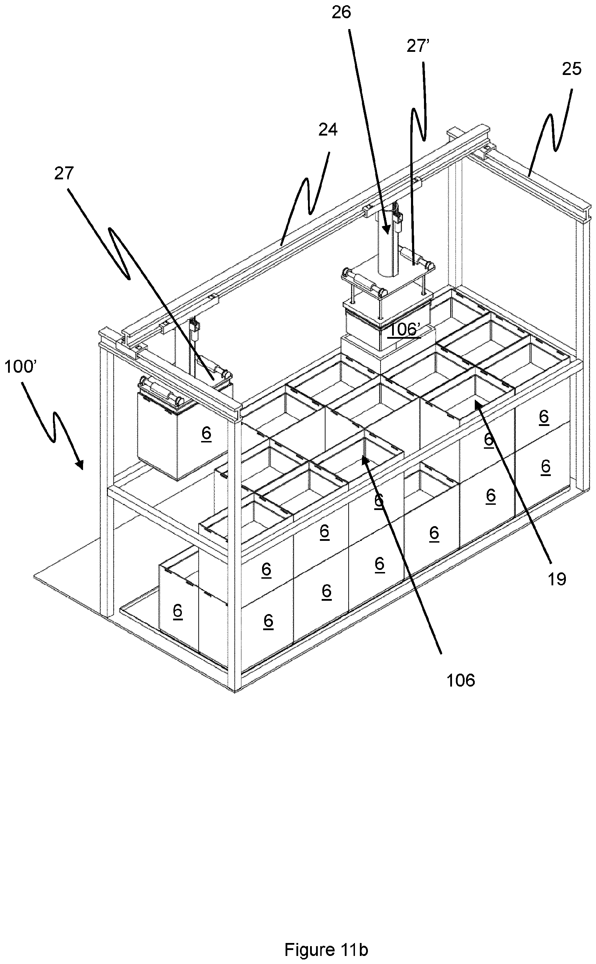

In figure 11b rear view of the framework 100' of figure 11a is observed. The stacker frames 6 are seen storing storage containers 106 within them, with space at the top opening 19 to accommodate at least one storage container 106. Thus, effectively utilizing the space on the nearby stacker frames 6 for temporary storage of storage containers 106 during digging operations.

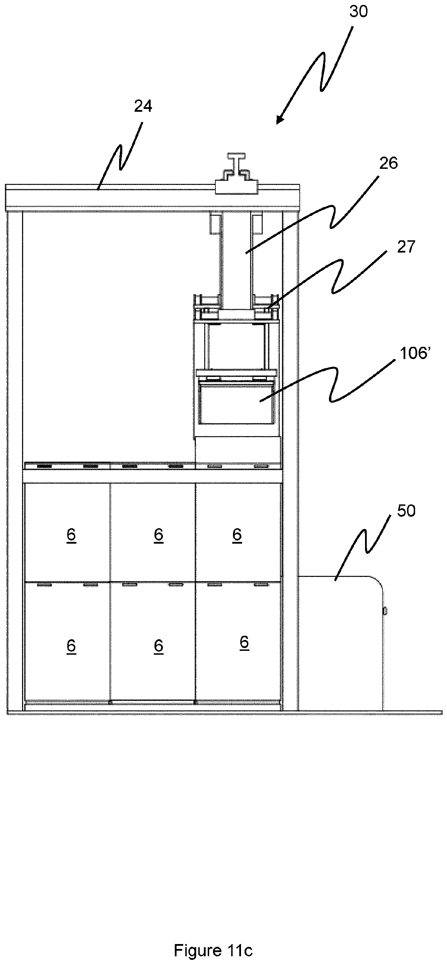

Figures 11c-11d are corresponding rear view of the framework structure 100' illustrating the gantry arrangement with inner and outer lifting frames 27', 27. The outer lifting frame 27 lifts a non-target stacker frame and moves it to a location as instructed by the control system 500. The inner lifting frame 27' lifts a target storage container 106' and sends the storage container 106' to the access station 30.

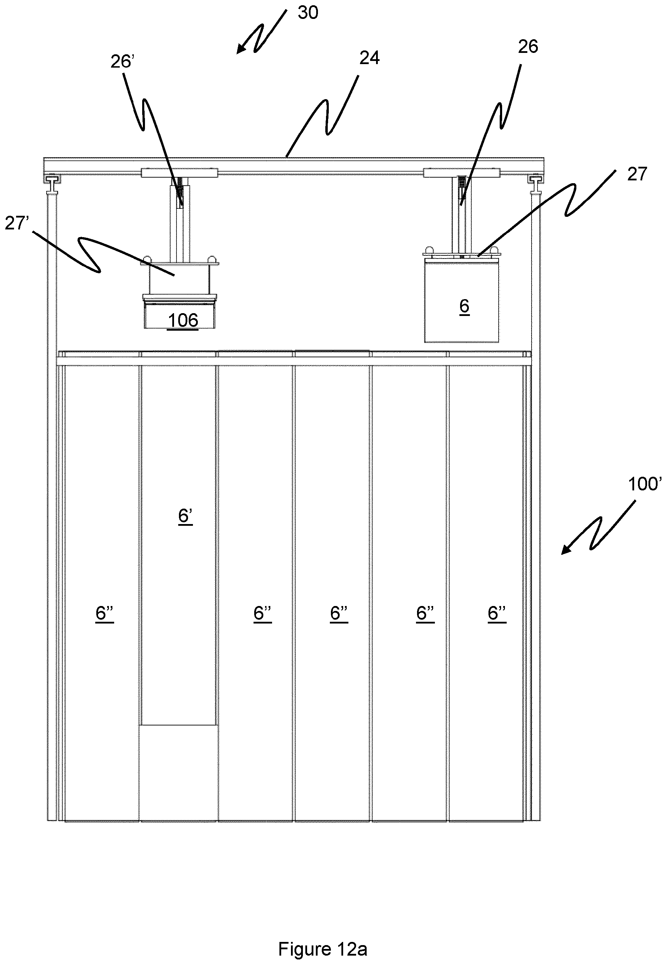

Fig. 12a-c illustrates another example of a framework structure and the gantry arrangement with inner and outer lifting frames. The framework structure 100' includes larger outer container 6" that houses the stacker frames 6 within. The outer lifting frame 27 is configured to lift stacker frames 6 that are stored within the large outer container 6". While, the inner lifting frame 27' is configured to lift storage containers 106 stored within the stacker frames 6. Figure 12a shows a rear view of the framework structure 100'.

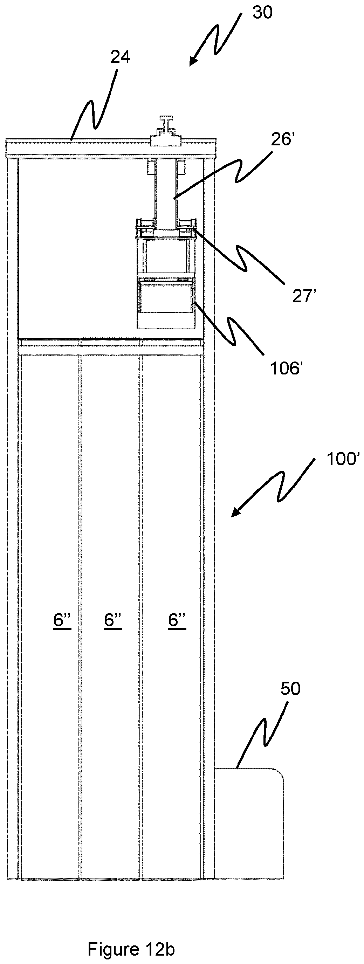

In figure 12b, a variation of the framework structure 100' of figure 12a is seen. The larger outer containers 6" houses stack of stacker frames 6 within. The gantry arrangement 30 with the inner lifting frame 27' lifting a target storage container 106' is seen.

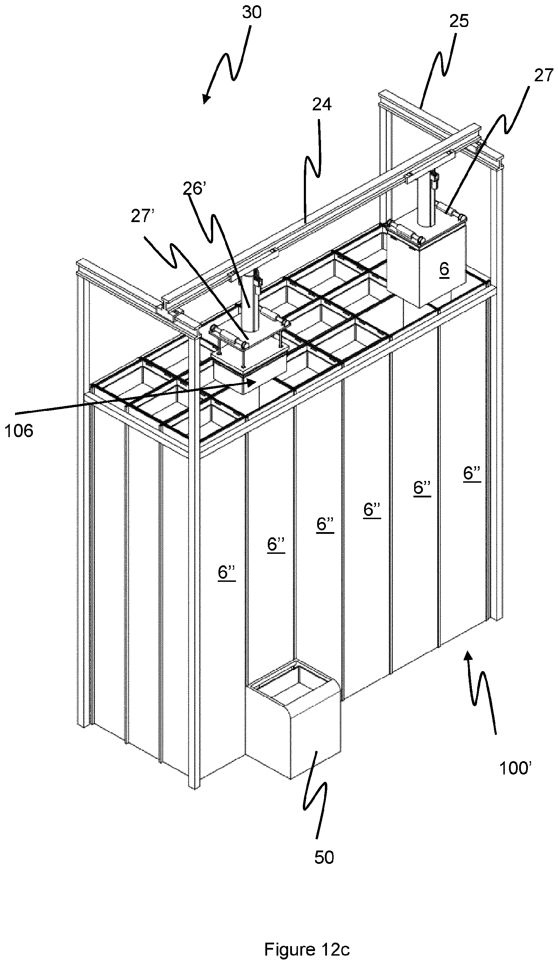

The target storage container 106' may also be removed from the framework structure 100' and transferred to the access station 50 arranged below the framework structure 100'. In figure 12c a side perspective view of the framework structure 100' is seen.

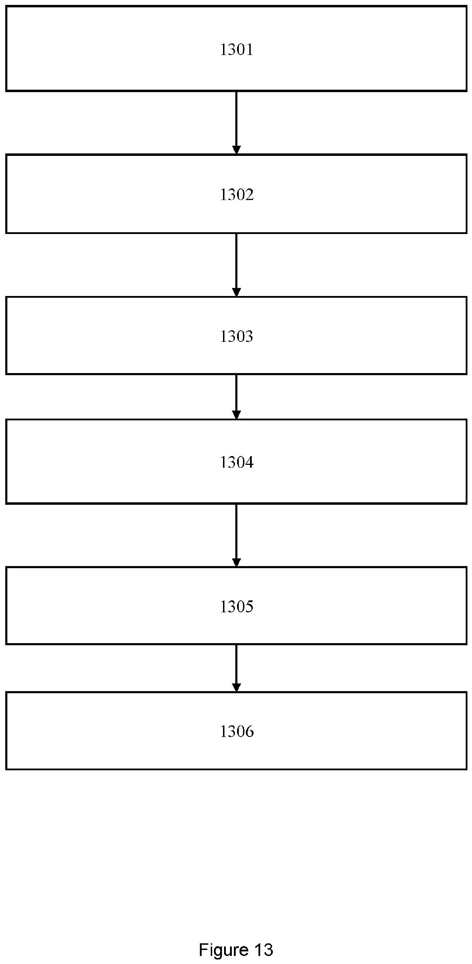

Fig. 13 is a flowchart illustrating method steps of retrieving a target storage container and employing stacker frames for temporary storage. The control system 500 sends (1301) instruction signals to the container handling vehicles 300 and the stacker frame lifter 8. The instruction signals contain information on retrieval of a target storage container 106' stored in a target stacker frame 6'. In case, the stacker frame 8 comprises a gantry arrangement with an inner and outer lifting frame 27', 27 the instruction signals are sent to the same. The container handling vehicle 300 and the stacker frame lifter 8 traverse (1302) to the position of the grid cell where the target stacker frame is located. The control system sends (1303) instruction signals to the container handling vehicle 300 and the stacker frame lifter 8, wherein the instruction signals contain information on which of the non-target stacker frames 6 are available, the position of the available stacker frames 6 and capacity of each available stacker frame 6. The control system 500 also assigns rankings to the non-target stacker frames 6 by considering the factors such as: availability, position and capacity. For example, a non-target stacker frame 6 which is adjacent to the target stacker frame and has availability for a single storage container 106 to overfill may be ranked 1, which is the highest rank. While, another non-target stacker frame 6 that is positioned two grid cells away in X direction from the target stacker frame 6' and has capacity to store two storage containers 106 may be ranked 2. The information on the ranking is also sent by the control system 500 in the instruction signals.

The stacker frame lifter 8 moves to the position of the target grid cell and performs (1304) digging operation to lift a non-target stacker frame 6 that is positioned above the target stacker frame 6'. The lifted non-target stacker frame 6 is then moved by the stacker frame lifter 8 to another location temporarily. If there are more than one non-target stacker frames 6 located above the target stacker frame 6', the stacker frame lifter 8 may perform several rounds of digging and lifting the non-target stacker frames 6 and positioning them at the temporary location.

When the target stacker frame 6' is accessible (meaning the target stacker frame 6' is positioned in that stack such that there is no other non-target stacker frame above it) the container handling vehicle 300 moves to the position on the grid cell above the target stacker frame 6' and performs (1305) digging operations on the storage containers 106 stored within the target stacker frame 6'. The non-target storage containers 106 stored above the target storage container 106' are lifted by the container handling vehicle 300 and moved to a non-target stacker frame 6 which is assigned highest ranking. In an example, if there are two non-target storage containers 106 above the target storage container 106, one non-target storage container may be moved to an adjacent stacker frame 6 with ranking 1 and the second non-target storage container 106 may be moved to another non-target stacker frame 6 which is located a row away from the target stacker frame 6'.

When the target storage container 106' is accessible by the container handling vehicle 300, the target storage container 106' is lifted (1306) and moved to the desired location or down the port column 119, 120 to an access station 50 from where it can be accessed by a human or a robotic operator.

Optionally, the container handling vehicle 300 may depending on its availability place the removed storage container 106 back into the target stacker frame 6'. Similarly, depending on the availability the stacker frame lifter 8 may also place the moved stacker frames 6 back to their position.

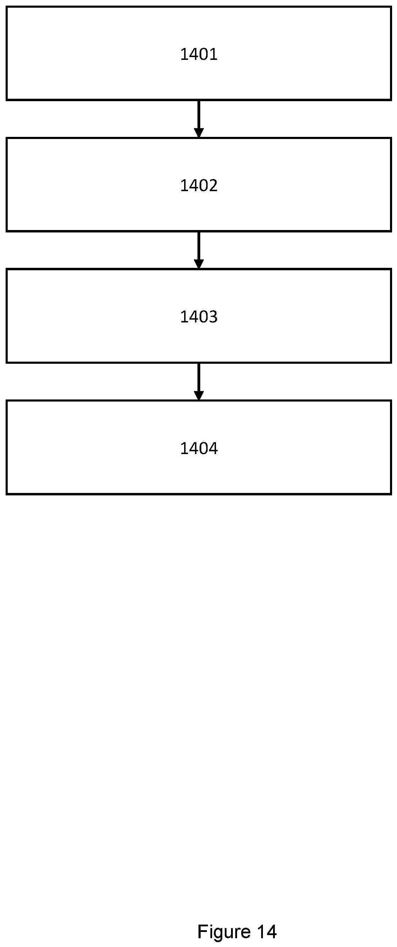

Fig. 14 is a flowchart of the process for assigning ranking to the stacker frames. During the process of retrieval of a target storage container 106' from a target stacker frame 6', the container handling vehicle 300 will perform digging operations to retrieve all the non-target storage containers 106 stored above the target storage container 106. The control system 500 determines (1401) the number of non-target storage containers 106 that are to be retrieved by the container handling vehicle 300. This information is based on the exchanges of the information between the container handling vehicle 300 operating on the framework structure 100' and the control system 500 that comprises information on the position and location of both the storage containers and the container handling vehicle 300.

Based on the number of non-target storage containers 106 the control system 500 then determines the number of non-target stacker frames 6 that are available for temporary storage. The control system 500 determines (1402) the number of non-target stacker frames 6 that are nearby the target stacker frame 6', its position, availability and capacity of the non-target stacker frames 6 nearby. The availability is determined if there is place on top of the upper opening 19 of the non-target stacker frames 6 such that at least one storage container can be stored to overfill the non-target stacker frame 6. Capacity is determined if the non-target stacker frame 6 may store more than one storage container 106 for example: a non-target stacker frame 6 may have capacity to store three storage containers to overfill. Overfill may be understood as defined above, that the storage container 106 is protruding from the top of the grid cell comprising the non-target stacker frame 6.

Based on the determined availability, position (or distance) and capacity of the stacker frames 6 nearby, the control system 500 assigns (1403) them ranking. The highest ranking is assigned to closest available stacker frame 6 and lowest ranking is assigned to the far stacker frames 6. Nearby or closest is referred to the stacker frame 6 that lies adjacent or within 2 grid cell spaces of the target stacker frame 6'.

The control system 500 then sends instruction signals to the container handling vehicle 300 to store the non-target storage containers 106 into the non-target stacker frames based on their ranking. The container handling vehicle 300 stores (1404) the non-target storage containers into the available non-target stacker frames based on their allocated ranking.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### LIST OF REFERENCE NUMBERS

- 1: Prior art automated storage and retrieval system
- 1': storage system
- 5: Lid of storage container
- 6: stacker frame
- 6': Target stacker frame
- 7: Stacker frame system
- 8: Stacker frame lifter

- 9: Upper position of stack
- 12: connecting recess of stacker frame
- 13: container connecting recess
- 14: side walls of the storage container
- 15: bottom of the storage container
- 16: upper rim of the storage container
- 18: Bottom of stacker frame
- 19: Upper opening of each stacker frame
- 20: Side wall of stacker frame
- 21: Guiding element of the stacker frame
- 22: Bottom recesses of stacker frame
- 24: First gantry beam
- 25: Second gantry beam
- 26: Telescopic arm
- 27: Outer lifting frame
- 27': Inner lifting frame
- 30: Gantry arrangement for the stacker frame lifter
- 50: Access station

- 100: Framework structure
- 100': Second type of framework structure
- 102: Upright members of framework structure
- 104: Storage volume/grid
- 105: Storage column
- 106: Storage container
- 106': Target storage container
- 107: Stack
- 108: Rail system
- 110: Parallel rails in first direction (X)
- 111: Parallel rails in second direction (Y)
- 112: Access opening
- 119: First port column
- 120: Second port column
- 200: Prior art container handling vehicle
- 200a: Vehicle body of the container handling vehicle 201
- 200b: Drive means / wheel arrangement / first set of wheels in first direction (X)
- 200c: Drive means / wheel arrangement / second set of wheels in second direction (*Y*)
- 300: Prior art cantilever container handling vehicle
- 300a: Vehicle body of the container handling vehicle 301
- 300b: Drive means / first set of wheels in first direction (*X*)
- 300c: Drive means / second set of wheels in second direction (*Y*)
- 304: Gripping device
- 400: Prior art container handling vehicle
- 400a: Vehicle body of the container handling vehicle 401
- 400b: Drive means / first set of wheels in first direction (*X*)
- 400c: Drive means / second set of wheels in second direction (*Y*)
- 404: Gripping device
- 404a: Lifting band
- 404b: Gripper
- 404c: Guide pin
- 404d: Lifting frame
- 500: Control system
- *X*: First direction
- *Y*: Second direction
- *Z*: Third direction

## Claims

1. A method for employing stacker frames (6) for storage of storage containers (106) in an automated storage and retrieval system (1), wherein the system (1) comprises:
- a framework structure (100) comprising:
- a plurality of upright members (102) defining a plurality of storage columns (105) for storing a stack of stacker frames (6), the stacker frames (6) being configured to hold a stack of storage containers (106, 106') in an interior space of the respective stacker frame (6),
- a stacker frame lifter (8) configured to handle stacker frames (6) and/or the storage containers (106) stored in the respective stacker frame (6);
- a plurality of container handling vehicles (200, 300, 400) operating on a rail system (108) and configured to handle the storage containers (106),
- a control system (500) configured to send instruction signals to control operations of the stacker frame lifter (8) and the plurality of container handling vehicles (200, 300, 400) and wherein the method comprises the steps of:
- A. sending instruction signals by the control system (500) to the stacker frame lifter (8) and the container handling vehicles (200, 300, 400 to retrieve a target storage container (106') from a target stacker frame (6');
- B. moving one or more non-target storage containers (106) positioned above the target storage container (106') by the stacker frame lifter (8) or the container handling vehicle (200, 300, 400) from the target stacker frame (6') into a non-target stacker frame (6) for temporary storage, so that the target storage container (106') is the uppermost storage container in the target stacker frame (6'); and
- C. retrieving the target storage container (106') using the stacker frame lifter (8) or the container handling vehicle (200, 300, 400).

2. The method in accordance with claim 1, wherein the method comprising performing the following before step B:
- removing a non-target stacker frame (6) stored above the target stacker frame (6') from the storage column (105) using the stacker frame lifter (8); and
- repeating the above step until the target stacker frame (6') is at an upper position (9) in the stack of the stacker frames (6).

3. The method in accordance with any one of the preceding claims, wherein step B comprises:
- determining a capacity, position and availability of the non-target stacker frames (6) in the stack of stacker frames (6);
- assigning ranking to the non-target stacker frames (6) based on their availability, capacity and distance to the target stacker frame (6'); and
- choosing the non-target stacker frames (6) for temporary storage based on their assigned ranking.

4. The method in accordance with any of the preceding claims, wherein step B comprises:
- moving the one or more non-target storage containers (106) to a single non target stacker frame (6).

5. The method in accordance with any of claims 1 to 4, wherein step B comprises:
- moving the one or more non-target storage containers (106) to a plurality of non-target stacker frames (6).

6. The method in accordance with any one of the preceding claims, wherein the step B comprises:
- positioning the non-target storage container(s) (106) to overfill the non-target stacker frame (6), such that the non-target storage container (106) protrudes above the framework structure from the non-target stacker frame (6) location.

7. The method in accordance with any one of the preceding claims, wherein each stacker frames (6) comprises:
- one or more guiding elements (21) provided on inner side wall(s) (20) of the stacker frame (6) and configured to guide the storage containers (106, 106') during storage; and wherein the method comprises:
- positioning the non-target storage containers (106) over the upper opening (19) of the non-target stacker frames (6); and
sliding the non-target storage containers (106) along the one or more guiding elements (21) for storage of the non-target storage container (106) within the non-target stacker frames (6).

8. An automated storage and retrieval system employing stacker frames (6) for storage of storage containers (106), wherein the system comprises:
- a framework structure (100) comprising:
- a plurality of upright members (102) defining a plurality of storage columns (105) for storing a stack of stacker frames (6), the stacker frames being configured to hold a stack of storage containers (106) in an interior space of the respective stacker frame (6),
- a stacker frame lifter (8) configured to handle stacker frames (6) and/or the storage containers (106) stored in the respective stacker frame (6);
- a plurality of container handling vehicles (200, 300, 400) for operation on a rail system (108) and configured to handle the storage containers (106);
- a control system (500) configured to send instruction signals to control operations of the stacker frame lifter (8) and the plurality of container handling vehicles (200, 300, 400) to perform the method steps in accordance with claim 1-7.

9. The automated storage and retrieval system in accordance with claim 8, wherein the system comprises the rail system (108) arranged on top of the framework structure (100) for guiding movement of container handling vehicles (200, 300, 400) operating on top of the rail system (108), wherein the rail system comprises a first set of parallel rails (110) arranged in a first direction (X), and a second set of parallel rails (111) arranged in a second direction (Y) which is perpendicular to the first direction and wherein the first and second sets of rails (110, 111) intersect to form grid cells with grid openings (112).

10. The automated storage and retrieval system in accordance with claim 8, wherein the stacker frame lifter comprises a gantry arrangement (30) that extends above the framework structure (100).

11. The automated storage and retrieval system in accordance with claim 10, wherein the gantry arrangement (30) comprises an inner lifting frame (27') and an outer lifting frame (27), wherein the inner lifting frame (27') is configured to lift the storage containers (106) within the stacker frame (6) and the outer lifting frame (27) is configured to lift the stacker frames (6).

12. The automated storage and retrieval system in accordance with any of claims 8 to 11, wherein each stacker frame (6) comprises a guiding element (21) provided on inner side wall(s) (20) of the stacker frame (6) and configured to guide the non-target storage containers (106, 106') during storage by positioning and sliding the non-target storage containers (106) from an upper opening (19) of the stacker frame (6) along the guiding elements (21) for storage of the non-target storage containers (106) within the stacker frames (6).

13. The automated storage and retrieval system in accordance with any of claims 8 to 12, wherein each stacker frames (6) comprise a recess (12) provided on an upper section of a side wall (20) of the stacker frame (6) which is configured to engage with a releasable latch on the stacker frame lifter (8).

14. The automated storage and retrieval system in accordance with any of claims 8 to 13, wherein the control system is configured to send instruction signals to the container handling vehicles (200, 300, 400) to temporarily block their motion over or around the non-target stacker frame (6) employed for temporary storage.

15. A computer program product comprising instructions which, when the program is executed by a computer coupled with or being a part of the control system of an automated storage and retrieval system of any of claims 8-14, causes the computer to send instruction signals to a stacker frame lifter and a container handling vehicle to carry out the steps of claim 1-7.
